# EUROPÄISCHE PATENTSCHRIFT

(11) **EP 0 999 232 B1**
(45) Veröffentlichungstag und Bekanntmachung des Hinweises auf die Patenterteilung: **03.03.2004**
(21) Anmeldenummer: 99121515.3
(22) Anmeldetag: 29.10.1999
(51) Int. Cl.: C08K 7/26, C08K 7/24, C08K 7/22

(54) **Duroplastischer Leichtwerkstoff und Verfahren zu seiner Herstellung**
Thermosetting lightweight material and its production
Matériau léger thermodurcissable et procédé pour sa production

(30) Priorität: 06.11.1998 DE 19851215
(43) Veröffentlichungstag der Anmeldung: 10.05.2000
(73) Patentinhaber: Stilkerieg, Berthold, Dipl.-Ing., 56651 Niederzissen (DE); Noack, Ralf, Dr., 14770 Brandenburg (DE); Herrmann, Thomas, Dr., 01067 Dresden (DE)
(72) Erfinder: Stilkerieg, Berthold, Dipl.-Ing., 56651 Niederzissen (DE); Noack, Ralf, Dr., 14770 Brandenburg (DE); Herrmann, Thomas, Dr., 01067 Dresden (DE)
(74) Vertreter: Schulte, Jörg, Dipl.-Ing.

(56) Entgegenhaltungen:
- US-A- 3 579 477
- US-A- 4 689 358
- DATABASE WPI Section Ch, Week 199204 Derwent Publications Ltd., London, GB; Class A23, AN 1992-030973 XP002133368 & SU 1 643 582 A (FIRSOV V V), 23. April 1991 (1991-04-23)
- PATENT ABSTRACTS OF JAPAN vol. 005, no. 114 (C-064), 23. Juli 1981 (1981-07-23) & JP 56 053147 A (ONOMICHI KUMIKA KOGYO KK), 12. Mai 1981 (1981-05-12)
- PATENT ABSTRACTS OF JAPAN vol. 008, no. 138 (C-231), 27. Juni 1984 (1984-06-27) & JP 59 047219 A (TOSHIBA CHEMICAL KK), 16. März 1984 (1984-03-16)

## Beschreibung

Die Erfindung betrifft ein Verfahren zur Herstellung eines Leichtwerkstoffes mit duroplastischen Eigenschaften, der als Formkörper zu Dämm- oder Isolierungszwecken eingesetzt werden kann und aus Hohlkugelaluminiumsilikat und einem Harz zusammengemischt und dann unter Wärmezufuhr ausgehärtet wird. Die Erfindung betrifft außerdem einen Leichtwerkstoff, bestehend aus Hohlkugelaluminiumsilikat und einem Harz, die zusammengemischt als Dämm- oder Isoliermaterial einzusetzen sind.

Derartiger Leichtwerkstoff besteht entweder aus leicht brennbarem Kunststoff, beispielsweise Styropor oder er ist nur mit entsprechendem Aufwand herzustellen und erfordert daher nicht unerhebliche Investitions- und auch laufend hohe Betriebskosten. Dabei besteht derartiger Leichtwerkstoff in der Regel aus einem Material, das relativ viele Hohlräume aufweist, sodass die statischen Daten in der Regel unbefriedigend sind, insbesondere sind die Druckfestigkeiten daraus hergestellter Formkörper unbefriedigend. Bei anderen wiederum ist von Nachteil, dass sie Wasser aufnehmen und auch festhalten, wodurch sowohl das Gewicht erhöht, wie auch die Dämmwirkung stark beeinträchtigt wird. Bekannt ist ein Verfahren (Database WPI Section Ch, Week 199204 Derwent Publications Ltd., London, GB; Class A23, AN 1992-030973 XP002133368 & SU 1 643 582 A (FIRSOV V), 23. April 1991 (1991-04-23)), bei dem reine Rohstoffe in Form eines Hohlkugelsilikats, Farbstoff, Transformer und Quarzsand zusammengemischt und ausgehärtet werden. Schon der hohe Anteil an Quarzsand von über 50 % zeigt, dass hier kein Leichtwerkstoff entsteht, sondern ein üblicher Baustoff. Das notwendige "Bindemittel" ist ein reines Polyesterharz, das schwer zu verarbeiten und vor allem teuer ist. Der Harzanteil liegt bei immerhin + 30%. Nach der Patent Abstracts of Japan vol. 005, no. 114 (C-064), 23. Juli 1981 (1981-07-23) & JP 56 053147 A (ONOMICHI KUMIKA KOGYO KK), 12. Mai 1981 (1981-05-12) wird Blähton verwendet, also ein nicht durchweg kugelförmiges Produkt. Es entsteht ein Schaum, der aus einem Abdeckpulver erzeugt wird und mit dem angestrebten Produkt (Leichtwerkstoff) nicht vergleichbar ist. Auch die "Trocknungstemperaturen" liegen mit 800 - 1.200 °C sehr hoch. Ähnlich schreibt auch das Verfahren nach der Patent Abstracts of Japan vol. 008, no. 138 (C-231), 27. Juni 1984 (1984-06-27) & JP 59 047219 A (TOSHIBA CHEMICAL KK), 16. März 1984 (1984-03-16) vor, dass Hohlkugelmaterial mit Polyester zu einem Werkstoff verarbeitet werden soll. Mengenangaben bezüglich Harz und Silikat fehlen ebenso, wie der Hinweis, dass man Restharzmaterial einsetzen kann. Gerade solches fällt bei der Pulverbeschichtung / Einbrennlackierung in großen Mengen an. Dieses muss über Aufhaldung entsorgt werden.

Der Erfindung liegt daher die Aufgabe zugrunde, einen für Formkörper und für Dämmzwecke einsetzbaren Leichtwerkstoff und ein Herstellungsverfahren zu schaffen, die ein gut herzustellendes und auch zu handhabendes und vor allem feuchtigkeitsresistentes Produkt unter Verwendung von Abfallprodukten garantieren.

Zur verfahrensmäßigen Lösung der Aufgabe ist vorgesehen, dass Hohlkugelaluminiumsilikat und ein aus Rückständen der Pulverbeschichtung / Einbrennlackierung stammendes Epoxy- und/oder Polyesterrestharzpulver in einem Anteilsverhältnis von 2/3 Silikatvolumenanteilen und 1/3 Pulverharzvolumenanteilen bis 1/3 Silikat und 2/3 Pulverharz miteinander gemischt und dann bei 200 °C einem "Brennprozess" ausgesetzt wird.

Bei einem derartigen Verfahren ergibt sich nach dem "Brennprozess" bei 200 °C ein Formkörper, der sich zunächst einmal durch eine nur geringe oder gar keine Schwindung auszeichnet. Das aus den Rückständen stammende Epoxy- und/oder Polyesterrestharz wird bei etwa 60 - 80 °C weich und wird dann flüssig, wobei es trotz des geringen Harzanteils von 15 - 20 % des Rückstandspulvers die kleinen Hohlkugeln aus Aluminiumsilikat überraschend sicher umgibt und zusammenbackt. Es ergibt sich dann ein recht stabiles Gerüst, wobei durch die verhältnismäßig geringe Menge des Harzpulvers ein niedriges Gewicht eingehalten werden kann. Das entsprechende Material, d. h. der Leichtwerkstoff kann für die verschiedensten Zwecke eingesetzt werden, wobei er vor dem Brennprozess in die entsprechende Form gebracht und dann entsprechend gebacken bzw. gebrannt wird. Ein entsprechender Leichtwerkstoff zeichnet sich durch ein ausgesprochen geringes Eigengewicht aus und ist vorteilhaft leicht zu bearbeiten, beispielsweise zu sägen, zu behauen o. Ä.. Vorteilhaft ist, dass das zum Einsatz kommende Bindemittel in Form des aus Rückständen der Pulverbeschichtung / Einbrennlackierung stammende Epoxy- bzw. Polyesterrestharzpulver bei einer vorab durchgeführten ausreichenden Mischung dafür sorgt, dass auch wirklich alle Hohlkugelaluminiumsilikatbestandteile "eingefangen" und im Formkörper fixiert sind. Das Gesamtmaterial ist hydrophob, sodass das Wasser abgestoßen und der Formkörper davon unbeeinflusst bleibt. Darüber hinaus sind sowohl die Silikate wie auch die Harzbestandteile weitgehend alterungsbeständig, sodass sich der Werkstoff entsprechend auch in diese Richtung auszeichnet.

Das zum Einsatz kommende Hohlkugelaluminiumsilikat kann aus verschiedenen Herkunftsstellen (Kraftwerken) stammen. Um die notwendige Einbindung des Silikates zu gewährleisten ist es von Vorteil, wenn dieses Hohlkugelaluminiumsilikat auf eine Korngröße von > 10 µ bis < 100 µ mit einem staubförmigen Epoxy- und/oder Polyesterrestharz vermischt und dann weiterverarbeitet wird. Bei derartigen Korngrößen ergeben sich vorteilhaft gleichmäßige Verteilungen und Schichten, sodass dieses Material sich durch das staubförmige Epoxy- und/oder Polyesterrestharz sicher einbinden lässt.

Weiter vorn ist bereits darauf hingewiesen worden, dass das Epoxy- und/oder Polyesterrestharz bei rund 60 - 80 °C anfängt in die flüssige Phase überzugehen. Um ein sicheres Einbinden des gesamten Silikates zu gewährleisten, sieht die Erfindung vor, dass bei dem "Brennprozess" die rund 200 °C Brenntemperatur eine halbe bis eineinhalb Stunden eingehalten wird. Eine immer gleichmäßige Ausbildung der so entstehenden Formkörper ist damit gewährleistet. Insbesondere ist aber sichergestellt, dass das entsprechend bearbeitete Harz auch wirklich aufgebracht wird und die Hohlkugeln einbindet.

Auf derartige Formen, die gefüllt werden, kann vorteilhaft gemäß einer Weiterbildung der Erfindung verzichtet werden, indem der Mischung Wasser und/oder Öl als Zeitbindungsmittel zugemischt wird, die dann geformt und dem "Brennprozess" zugeführt wird. Diese Zeitbindungsmittel verflüchtigen sich entweder bei längerer Lagerung oder aber spätestens während des Brennprozesses, ohne den weiteren Prozess zu behindern. Die vorläufige Bindung über Wasser oder Öl wird dann bei etwa 80 °C enden und in die Bindung durch das flüssig werdende Harz übergehen, sodass mit einer derartigen Vorgehensweise sichergestellt wird, dass ohne jede Form gearbeitet werden kann. Die einzelnen Formkörper werden im "nassen Zustand" geformt und dann in dieser Form dem Brennprozess zugeführt, wo eine entsprechende Verfestigung bzw. abschließende Bindung erreicht wird.

Will man eine weitere Reduzierung des Gewichtes derartiger Formkörper erreichen und kann dabei eine geringere Festigkeit akzeptieren, so ist von Vorteil, wenn der Mischung, vorzugsweise den Anteil Silikat teilweise ersetzend, bei etwa 100 °C vergasende Kunststoffe in Kugel- oder Faserform zugegeben werden. Es versteht sich, dass bei derartigen Kunststoffen sich eine Art Hohlkörper-Formkörper ergibt, der ein entsprechend vorteilhaft geringes Gewicht hat und dies vor allem durch eine Vielzahl entsprechender Hohlräume, die beim Vergasen des Kunststoffes entstehen.

Der Bindeprozess kann vorteilhaft optimiert und die Hitzebeständigkeit verbessert werden, indem der Mischung anorganische Bindemittel in Form von Phosphaten, Silikaten, Borsäure etc. zugemischt wird, vorzugsweise als Teilersatz des Harzanteils. Damit ergibt sich eine hohe Temperaturbeständigkeit für ein entsprechend hergestelltes Material bzw. entsprechend hergestellte Formkörper.

Das erfindungsgemäße Verfahren bietet darüber hinaus auch die Möglichkeit, Stabilisierungsteile mit einzubinden, beispielsweise um freitragende Bauteile herzustellen, die aber eben durch ein geringeres bzw. geringes Gewicht auffallen sollen. Dementsprechend ist erfindungsgemäß vorgesehen, dass in den Formkörper vor dem "Brennprozess" eine Armierung, vorzugsweise eine Stahlarmierung eingebracht wird. Diese Stahlarmierung wird vorteilhaft mit eingebunden, weil sich das Pulverharz daran festsetzt und damit für eine intensive Verbindung von Formkörper und Armierung Sorge trägt.

Weiter vorne ist bereits darauf hingewiesen worden, dass vorteilhafterweise mit dem Einfüllen der Mischung in Hohlkörper, dieser Hohlkörper auch entsprechend bearbeitet werden kann. Gemäß der Erfindung ist vorgesehen, dass die mit der Mischung verfüllten Hohlkörper/Profile nachträglich pulverbeschichtet werden, wobei die Mischung gleichzeitig wärmebehandelt wird. Diese Wärmebehandlung erfolgt über die Pulverbeschichtung oder aber durch gesonderte Aggregate, wobei wegen der geringen Schwindung eine annähernd 100 %ige Ausfüllung des damit verfüllten Hohlraumes gewährleistet ist. Das Material ist darüber hinaus hydrophob, sodass ein Eindringen von Feuchtigkeit in entsprechend geschützte Hohlkörper ausgeschlossen ist.

Ein vielseitig einsetzbarer Leichtwerkstoff zeichnet sich dadurch aus, dass das Hohlkugelaluminiumsilikat und ein aus Rückständen der Pulverbeschichtung / Einbrennlackierung stammendes Epoxy- und/oder Polyesterrestharzpulver mit einer Korngröße bis 30 µ durch Wärmezugabe zu einem Formkörper zusammengeformt sind, der leicht, schwimmfähig und mit handelsüblichem Werkzeug bearbeitbar ist, wobei der Anteil Restpulverharz 1/3 bis 2/3 betragend eingestellt ist. Das Hohlkugelaluminiumsilikat und das Polyesterrestharzpulver bzw. Epoxyrestharzpulver sorgen dabei dafür, dass sich ein insgesamt gleichmäßig auslastbarer bzw. beeinflussbarer Formkörper bildet, der für die verschiedensten Einsatzzwecke geeignet ist und der gut zu bearbeiten ist und der sich u. a. auch durch eine hydrophobe Oberfläche auszeichnet. Ein derartiges Bindemittel aus Epoxy- oder Polyesterrestharz ist wegen der geringen Korngröße optimal geeignet, um mit den Kugeln aus Aluminiumsilikat vermischt und weiterverarbeitet zu werden. Die Pulverpartikel weisen in etwa die Korngröße auf bzw. sind etwas kleiner, als die zum Einsatz kommenden Hohlkugeln aus Aluminiumsilikat.

Zur Veränderung der Festigkeitswerte ist es möglich, das Grundmaterial Hohlkugelaluminiumsilikat teilweise durch Sand oder ähnlichen Füllstoff zu ersetzen.

Das leichte Werkstoffmaterial kann zusätzlich gewichtsentlastet werden, indem das Grundmaterial Hohlkugelaluminiumsilikat teilweise durch unter 200 °C schmelzende bzw. verdampfende Kunststoffformteile, vorzugsweise Styroporkugeln o. Ä. ersetzt wird. Diese Kunststoffe verflüchtigen sich bei bzw. noch vor 200 °C, sorgen aber für Hohlräume im eigentlichen Hohlkörper und damit für eine deutliche Reduzierung des Gesamtgewichtes.

Der Leichtwerkstoff zeichnet sich insbesondere dadurch aus, dass der Formkörper ein Raumgewicht von 0,4 bis 0,5 kg/dm³ und eine Druckfestigkeit von 10- 20 N/cm² aufweisend ausgebildet ist. Das Raumgewicht und die Druckfestigkeit können wie weiter vorne erwähnt geändert bzw. den jeweiligen Gegebenheit zweckmäßigerweise angepasst werden, in dem man im Herstellungsprozess entsprechende Drittbestandteile mit einführt.

Die Erfindung zeichnet sich insbesondere dadurch aus, dass ein Verfahren und ein Formkörper bzw. ein Leichtwerkstoff geschaffen sind, die sich optimal für die verschiedensten Einsatzzwecke eignen. So kann aus entsprechendem Leichtwerkstoff praktisch jedes Pflanzgefäß größeren Formates problemlos hergestellt werden, bis herunter zum einfachen Blumentopf, wobei dieses Material den Vorteil hat, dass es aufgrund seiner Hydrophobie die Feuchtigkeit im Pflanzbereich wirksam erhält, andererseits aber auch dafür sorgt, dass optimale Temperaturverhältnisse bestehen. Es zeigt sich somit, dass daraus hergestellte Pflanzgefäße zu günstigen Bedingungen für Blumen beitragen. Darüber hinaus ist die Möglichkeit gegeben, den Leichtwerkstoff für Schallschutz- und Brandschutzmaßnahmen einzusetzen, insbesondere, wenn er durch entsprechende Zusatzbindemittel wie Phosphate eine hohe Temperaturbeständigkeit aufweist. Als Wärmedämmung können die Leichtwerkstoffe in Platten- oder Formkörperform eingesetzt werden, wobei auch Rohrummantelungen denkbar sind, wenn die einzelnen Formkörper mit entsprechenden Formen hergestellt werden. Weiterhin ist vorteilhaft, dass derartige Werkstoffe auch zum Ausfüllen von Hohlräumen verwendet werden können, wobei durch entsprechende Wärmebeeinflussung dafür Sorge getragen wird, dass das Verfüllmaterial sich intensiv mit der Innenwand des Profils verbindet. Da praktisch keine Schrumpfung auftritt, ergibt sich ein sehr stabiles Bauteil. Aber auch die Formkörper selbst können vorteilhaft stabilisiert werden, indem sie mit einer Armierung versehen werden, die sich dann ebenso intensiv einbinden lässt.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Schema des Herstellungsverfahrens,
- Fig. 2: einen Formkörper in perspektivischer Darstellung,
- Fig. 3: eine Rohrschalung,
- Fig. 4: eine Feuertür,
- Fig. 5: einen Blumentopf und
- Fig. 6: einen armierten Stützbogen.

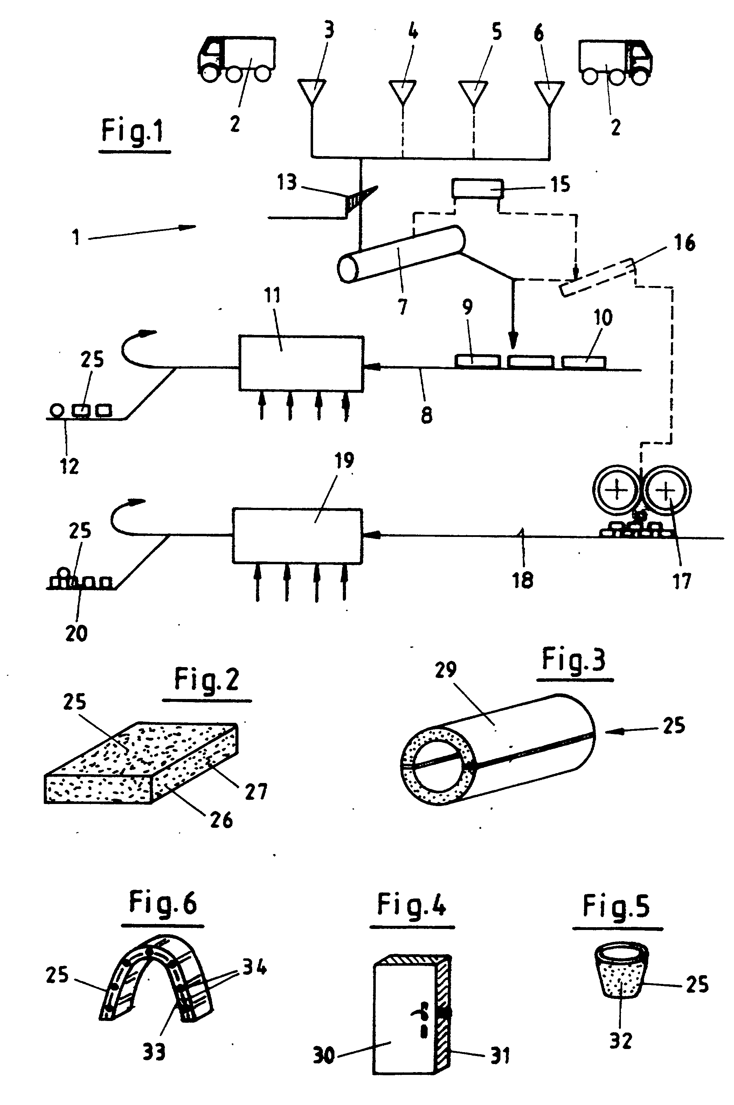

Fig. 1 zeigt eine schematisiert wiedergegebene Anlage 1 zur Herstellung von Leichtwerkstoffen. Die Ausgangsmaterialien werden über die LKW-Zulieferung 2 beigestellt oder auf andere Art und Weise zugeliefert, wobei ein Hohlkugelaluminiumsilikat-Bunker 3, ein Sandbunker 4, ein Zusatzbindemittel-Bunker 5 und ein Harzbunker 6 für Epoxy- bzw. Polyesterrestharzpulver vorgesehen sind.

Das Ausgangsmaterial wird gemeinsam oder getrennt über das Doppelsieb 13 geführt, wobei hier Material unter 10 und über 100 µ abgeschieden wird. Denkbar ist es auch, dass statt des Doppelsiebes 13 zwei Siebe zum Einsatz kommen. Dieser Siebbereich ist vereinfacht wiedergegeben.

Nach Durchlaufen des Siebes 13 gelangt das Gemisch entweder gemeinsam oder getrennt in die Mischanlage 7, hier eine Art Mischschnecke, in der die einzelnen Komponenten intensiv miteinander vermischt werden. Das Gemisch wird dann auf das Transportband 8 übergeben bzw. in dort aufliegende Formen 9, 10 gegeben, sodass es dann in den Formen 9, 10 bis zum Brennofen und durch diesen Brennofen 11 hindurchgeführt werden kann. Nicht im Einzelnen dargestellt ist, dass nach Verlassen des Brennofens 11 die einzelnen Formkörper 25 von den Formen 9, 10 getrennt werden, die über das Transportband 8 zurückgeführt werden, während die einzelnen Formkörper 25 zum Lager 12 kommen und von dort aus weiter verteilt zu werden.

Soll auf die Formen 9, 10 verzichtet werden, so besteht auch die Möglichkeit, die Mischung nach Durchlaufen der Mischanlage 7 einem Nachmischer 16 zuzuführen, wo Wasser oder Öl aus dem Tank 15 herausgenommen und mit der Mischung vermischt wird. Dieses feuchte Gemisch wird dann einer Formwalze 17 oder einem ähnlichen formgebenden Instrument zugeführt, um entsprechende Formstücke bzw. Formkörper 25 vorzugeben, die dann über das Transportband 18 in den Brennofen 19 gegeben werden, um hier den Formvorgang abzuschließen. Das Wasser oder das Öl verflüchtigen sich, sodass nach Verlassen des Brennofens 19 entsprechend genau geformte Formkörper 25 auf dem Lagerplatz 20 vorhanden sind.

Fig. 2 zeigt einen derartigen Formkörper 25, der entweder den Brennofen 11 oder den Brennofen 19 durchlaufen hat und eine sehr stabile Form aufweist. Nicht mehr genau erkennbar sind hier die einzelnen Komponenten, aus denen der Formkörpers 25 besteht. Erkennbar sind aber letztlich noch die Hohlkugelaluminiumsilikate 26 und andeutungsweise auch das Restharzpulver 27. Statt des mit Säge o. ä. Gerät bearbeitbaren Formkörper 25 kann auch gleich eine zweiteilige Rohrschalung 29 vorgegeben werden, in der ebenfalls Hohlkugelaluminiumsilikate und Restharzpulver 27 so vereinigt sind, dass sich eine jeweils stabile Halbschale ergibt, die um die nicht dargestellte Rohrleitung herumgelegt werden kann.

Fig. 4 zeigt einen Türkörper 30, dessen Hohlraum mit einer Türfüllung 31 versehen ist. Bei der Türfüllung handelt es sich ebenfalls wieder um eine Mischung aus Hohlkugelaluminiumsilikaten 26 und Restharzpulver 27, die durch den Härtungsprozess bzw. den Brennofen entsprechend verbunden sind. Eine in Fig. 4 dargestellte Tür kann als Feuertür zum Einsatz kommen, weil entsprechend hohe Temperaturen über eine ausreichende Zeit auf sie einwirken können, ohne dass sie zerstört wird.

Fig. 5 deutet einen Blumentopf 32 an, der ebenfalls aus der Mischung aus Hohlkugelaluminiumsilikaten 26 und aus Restharzpulver 27 besteht. Die entsprechenden Komponenten sind zusammengemischt und der Blumentopf 32 dann im Brennofen 19 oder auch 11 entsprechend erbrannt. Ein solcher Blumentopf 32 zeichnet sich vor allem durch eine gute Stabilität und ein ausgesprochen geringes Gewicht aus.

Fig. 6 ist wiedergegeben, um zu verdeutlichen, wie vielseitig ein derartiger Leichtwerkstoff eingesetzt werden kann. Angedeutet ist hier ein Stützbogen 33, in den Armierungsstangen 34 eingebracht worden sind, um so eine Tragfähigkeit für den Stützbogen 33 zu ergeben. Ein derartiger Stützbogen 33 kann für die verschiedensten Zwecke eingesetzt werden, weil nämlich die Armierungsstangen 34 in die Mischung aus Hohlkugelaluminiumsilikat 26 und Restharzpulver 27 eng eingebunden sind. Entsprechendes verdeutlicht Fig. 6.

Alle genannten Merkmale, auch die den Zeichnungen allein zu entnehmenden, werden allein und in Kombination als erfindungswesentlich angesehen.

## Patentansprüche

1. Verfahren zur Herstellung eines Leichtwerkstoffes mit duroplastischen Eigenschaften, der als Formkörper zu Dämm- oder Isolierungszwecken eingesetzt werden kann,
**dadurch gekennzeichnet,**
**dass** Hohlkugelaluminiumsilikat und ein aus Rückständen der Pulverbeschichtung / Einbrennlackierung stammendes Epoxy- und/oder Polyesterrestharzpulver in einem Anteilsverhältnis von 2/3 Silikatvolumenanteilen und 1/3 Pulverharzvolumenanteilen bis 1/3 Silikat und 2/3 Pulverharz miteinander gemischt und dann bei 200 °C einem "Brennprozess" ausgesetzt werden.

2. Verfahren nach Anspruch 1,
**dadurch gekennzeichnet,**
**dass** das Hohlkugelaluminiumsilikat auf eine Korngröße von > 10 µ bis < 100 µ mit einem staubförmigen Epoxy- und/oder Polyesterharz vermischt wird.

3. Verfahren nach einem der vorhergehenden Ansprüche,
**dadurch gekennzeichnet,**
**dass** bei dem "Brennprozess" die 200 °C Brenntemperatur eine halbe bis eineinhalb Stunden eingehalten wird.

4. Verfahren nach einem der vorhergehenden Ansprüche,
**dadurch gekennzeichnet,**
**dass** der Mischung Wasser und/oder Öl als Zeitbindungsmittel zugemischt wird, die dann geformt und dem "Brennprozess" zugeführt wird.

5. Verfahren nach einem der vorhergehenden Ansprüche,
**dadurch gekennzeichnet,**
**dass** der Mischung, vorzugsweise den Anteil Silikat teilweise ersetzend, bei etwa 100 °C vergasende Kunststoffe in Kugel- oder Faserform zugegeben werden.

6. Verfahren nach einem der vorhergehenden Ansprüche,
**dadurch gekennzeichnet,**
**dass** der Mischung anorganische Bindemittel in Form von Phosphaten, Silikaten, Borsäure etc. zugemischt wird, vorzugsweise als Teilersatz des Harzanteils.

7. Verfahren nach einem der vorhergehenden Ansprüche,
**dadurch gekennzeichnet,**
**dass** in den Formkörper vor dem "Brennprozess" eine Armierung, vorzugsweise eine Stahlarmierung eingebracht wird.

8. Verfahren nach einem der vorhergehenden Ansprüche,
**dadurch gekennzeichnet,**
**dass** die mit der Mischung verfüllten Hohlkörper/Profile nachträglich pulverbeschichtet werden, wobei die Mischung gleichzeitig wärmebehandelt wird.

9. Leichtwerkstoff, bestehend aus Hohlkugelaluminiumsilikat und einem Harz, die zusammengemischt als Dämm- und Isoliermaterial einsetzbar sind,
**dadurch gekennzeichnet,**
**dass** das Hohlkugelaluminiumsilikat (26) und ein aus Rückständen der Pulverbeschichtung / Einbrennlackierung stammendes Epoxy- und/oder Polyesterrestharzpulver (27) mit einer Korngröße bis 30 µ durch Wärmezugabe zu einem Formkörper (25) zusammengeformt sind, der leicht, schwimmfähig und mit handelsüblichem Werkzeug bearbeitbar ist, wobei der Volumenanteil Restharzpulver 1/3 bis 2/3 betragend eingestellt ist.

10. Leichtwerkstoff nach Anspruch 9,
**dadurch gekennzeichnet,**
**dass** das Grundmaterial Hohlkugelaluminiumsilikat (26) teilweise durch Sand oder ähnlichen Füllstoff ersetzt ist.

11. Leichtwerkstoff nach Anspruch 9,
**dadurch gekennzeichnet,**
**dass** das Grundmaterial Hohlkugelaluminiumsilikat (26) teilweise durch unter 200 °C schmelzende bzw. verdampfende Kunststoffformteile, vorzugsweise Styroporkugeln, ersetzt ist.

12. Leichtwerkstoff nach einem der vorhergehenden Ansprüche,
**dadurch gekennzeichnet,**
**dass** die Formkörper (25) auf ein Raumgewicht von 0,4 bis 0,5 kg/dm³ und eine Druckfestigkeit von 10 - 20 N/cm² aufweisend ausgebildet ist.

## Claims

1. A process for the manufacture of a lightweight material having thermosetting properties, which can be used as a moulded article for shielding or insulation purposes,
**characterised in that** hollow spherical aluminium silicate and an epoxy and/or polyester residual resin powder originating from residues of the powder coating/baking varnishing are mixed with one another in a fraction ratio of 2/3 silicate volume fractions and 1/3 powder resin volume fractions up to 1/3 silicate and 2/3 powder resin and then are subjected to a "burning process" at 200°C.

2. A process according to Claim 1,
**characterised in that** the hollow spherical aluminium silicate is mixed to a grain size of > 10 µ to < 100 µ with a dust-shaped epoxy and/or polyester resin.

3. A process according to one of the preceding Claims,
**characterised in that** in the "burning process" the 200°C burning temperature is observed for half an hour to one and a half hours.

4. A process according to one of the preceding Claims,
**characterised in that** water and/or oil is added to the mixture as a time binding medium, which is then shaped and supplied to the "burning process".

5. A process according to one of the preceding Claims,
**characterised in that** plastics, which gasify at roughly 100 °C and are in spherical or fibrous form, are added to the mixture, preferably partially replacing the silicate fraction.

6. A process according to one of the preceding Claims,
**characterised in that** inorganic binding agent in the form of phosphates, silicates, boric acid etc. is added to the mixture, preferably as a partial replacement for the resin fraction.

7. A process according to one of the preceding Claims,
**characterised in that** a reinforcement, preferably a steel reinforcement, is introduced into the moulded article before the "burning process".

8. A process according to one of the preceding Claims,
**characterised in that** the hollow articles/profiles filled with the mixture are subsequently powder-coated, the mixture simultaneously being heat-treated.

9. A lightweight material, consisting of hollow spherical aluminium silicate and a resin which can be used mixed together as shielding and insulating material,
**characterised in that** the hollow spherical aluminium silicate (26) and an epoxy and/or polyester residual resin powder (27) originating from residues of the powder coating/baking varnishing with a grain size of up to 30 µ are moulded together by the addition of heat to produce a moulded article (25), which is light, can float and can be machined with a commercially available tool, the volume fraction of the residual resin powder being set to be 1/3 to 2/3.

10. A lightweight material according to Claim 9,
**characterised in that** the basic material hollow spherical aluminium silicate (26) is partially replaced by sand or similar filler.

11. A lightweight material according to Claim 9,
**characterised in that** the basic material hollow spherical aluminium silicate (26) is partially replaced by plastic mouldings which melt or evaporate below 200°C, preferably Styrofoam spheres.

12. A lightweight material according to one of the preceding Claims,
**characterised in that** the moulded articles (25) is constructed having a unit weight of 0.4 to 0.5 kg/dm³ and a compressive strength of 10 - 20 N/cm².

## Revendications

1. Procédé de fabrication d'un matériau léger possédant des propriétés thermodurcissables, qui peut être utilisé comme corps de forme pour le calorifugeage ou l'isolation,
**caractérisé**
**en ce qu'**on mélange entre eux un silicate d'aluminium en sphères creuses et une poudre de résidus de résine d'époxyde et/ou de polyester provenant de résidus de revêtement par poudre/vemissage au vernis à cuire, dans un rapport de proportion allant de 2/3 parties en volume de silicate et 1/3 parties en volume de poudre de résine jusqu'à 1/3 de silicate et 2/3 de poudre de résine, et on les soumet à un "processus de cuisson" à 200 °C.

2. Procédé selon la revendication 1,
**caractérisé**
**en ce qu'**on mélange le silicate d'aluminium en sphères creuses à une résine d'époxy et/ou de polyester pulvérulent pour atteindre une granulométrie de > 10 µ à < 100 µ.

3. Procédé selon une de revendications précédentes,
**caractérisé**
**en ce que**, lors du "processus de cuisson", on maintient la température de cuisson de 200 °C pendant une demi-heure à une heure-et-demi.

4. Procédé selon une des revendications précédentes,
**caractérisé**
**en ce qu'**on ajoute de l'eau et/ou de l'huile au mélange en tant qu'agents liants temporaires, le mélange étant ensuite mise en forme et envoyé au "processus de cuisson".

5. Procédé selon une des revendications précédentes,
**caractérisé**
**en ce qu'**on ajoute au mélange, de préférence en remplacement partiel de la proportion de silicate, des matières synthétiques en billes ou en fibres, qui se gazéifient à environ 100 °C.

6. Procédé selon une des revendications précédentes,
**caractérisé**
**en ce qu'**au mélange, on ajoute en mélange des liants inorganiques sous la forme de phosphates, silicates, acide borique, etc., de préférence en remplacement partiel de la proportion de résine.

7. Procédé selon une des revendications précédentes,
**caractérisé**
**en ce qu'**on incorpore une armature, de préférence une armature d'acier, dans le corps de forme avant le "processus de cuisson".

8. Procédé selon une des revendications précédentes,
**caractérisé**
**en ce que** les corps creux/profilés remplis du mélange sont ultérieurement soumis à un revêtement par poudre, le mélange subissant simultanément un traitement thermique.

9. Matériau léger composé de silicate d'aluminium en sphères creuses et d'une résine qui peuvent être utilisés en mélange mutuel comme matériau de calorifugeage et d'isolation,
**caractérisé**
**en ce que** le silicate d'aluminium en sphères creuses (26) et une poudre de résidus de résine d'époxyde et/ou de polyester (27) provenant de résidus de revêtement par poudre/vernissage au vernis à cuire d'une granulométrie de jusqu'à 30 µ sont formés ensemble par apport de chaleur pour former un corps de forme (25) qui est léger, flotte sur l'eau et peut être usiné avec des outils habituels du commerce, la proportion en volume de poudre de résidus de résine étant réglée sur 1/3 à 2/3.

10. Matériau léger selon la revendication 9,
**caractérisé**
**en ce que** le silicate d'aluminium en sphères creuses (26) constituant la matière de base est partiellement remplacé par du sable ou une matière de remplissage analogue.

11. Matériau léger selon la revendication 9,
**caractérisé**
**en ce que** le silicate d'aluminium en sphères creuses (26) constituant la matière de base est partiellement remplacé par des pièces de forme en matière synthétique qui fondent ou se vaporisent au-dessous de 200 °C, de préférence des sphères de polystyrène expansé.

12. Matériau léger selon une des revendications précédentes,
**caractérisé**
**en ce que** les corps de forme (25) sont réalisés pour présenter un poids spécifique apparent de 0,4 à 0,5 kg/dm³ et une résistance à la compression de 10-20 N/cm².
